Europäisches Patentamt

European Patent Office

Office européen des brevets

(11) Numéro de publication: 0 179 684
A2

# DEMANDE DE BREVET EUROPEEN

(21) Numéro de dépôt: 85401809.0

(22) Date de dépôt: 18.09.85

(51) Int. Cl.4: G01N 15/08 , G01N 25/48

(30) Priorité: 26.09.84 FR 8414792

(43) Date de publication de la demande:
30.04.86 Bulletin 86/18

(84) Etats contractants désignés:
DE GB

(71) Demandeur: COMMISSARIAT A L'ENERGIE ATOMI-
QUE Etablissement de Caractère Scientifique Technique et Industriel
31/33, rue de la Fédération
F-75015 Paris(FR)
Demandeur: CENTRE NATIONAL DE LA RECHER-
CHE SCIENTIFIQUE (CNRS)
15, Quai Anatole France
F-75700 Paris(FR)

(72) Inventeur: Barberi, Paul
6, Allée des Lavandières
F-78320 Le Mesnil Saint Denis(FR)
Inventeur: Bergez, Pierre
32, rue Dareau
F-75014 Paris(FR)
Inventeur: Brun, Maurice
9, rue Prévost
F-69006 Lyon(FR)
Inventeur: Chevalier, Michel
12, Allée des Petits Champs
F-91310 Montlhery(FR)
Inventeur: Eyraud, Charles
34, rue Joliot Curie
F-69005 Lyon(FR)
Inventeur: Quinson, Jean-François
11, rue Pierre Sermet
F-69330 Meyzieu(FR)

(74) Mandataire: Mongrédien, André et al
c/o BREVATOME 25, rue de Ponthieu
F-75008 Paris(FR)

(54) Appareil de mesure thermique de la texture d'un corps poreux.

(57) Il comprend une tête de mesure (2), un ensemble de
mesure (4) et un moyen de traitement de commande (6),
ladite tête de mesure étant munie de deux cellules cylindriques identiques (8, 10), une cellule de mesure et une cellule
de référence, disposées dans un four (11), ledit appareil étant
caractérisé en ce que l'ensemble de mesure (4) comprend un
moyen de mesure de la température (12) de la cellule de
mesure, un moyen de mesure d'un effet calorifique dans la
cellule de mesure, ledit moyen étant constitué d'un moyen de
détection de l'effet calorifique et d'un moyen d'étalonnage
(16), un moyen de régulation en température comprenant un
moyen (18) de chauffage du four, lesdits moyens de mesure
délivrant des signaux de température et d'effet calorifique au
moyen de traitement (6), ce dernier commandant le moyen
de chauffage.

FIG. 1

## APPAREIL DE MESURE THERMIQUE DE LA TEXTURE D'UN CORPS POREUX

La présente invention a pour objet un appareil de mesure thermique de la texture d'un corps poreux appelé thermoporomètre. Les corps poreux sont utilisés dans de nombreuses branches de l'industrie et, en règle générale, chaque fois qu'une phase solide insoluble doit être mise en contact intime avec un fluide. C'est le cas des catalyseurs de craquage ou de synthèse des hydrocarbures, des charges introduites dans les élastomères ou les peintures, des pigments ou des absorbants utilisés pour la purification ou l'analyse chimique (tamis moléculaire, absorbant pour chromatographie), des liants hydrauliques (ciment), des poudres destinées à la préparation d'émulsions (émulsion photographique, émulsion de produits pour traitements agricoles). Les corps poreux sont également utilisés dans les méthodes séparatives telles que l'ultrafiltration.

Les méthodes d'étude de la texture d'un corps poreux dépendent de la taille des pores. Pour un diamètre supérieur à 50 nanomètres environ, on a recours aux techniques de l'analyse microscopique optique. L'invention concerne l'étude de la texture des corps poreux dont le rayon des pores est inférieur à 150 nanomètres environ. On connaît plusieurs méthodes de mesure de la porosité de tels corps poreux.

On connaît des méthodes d'observation directe telles que la microscopie électronique. Cette technique qui permet d'observer directement la structure du corps poreux s'avère malheureusement délicate à mettre en oeuvre dans le cas de corps mésoporeux, c'est-à-dire dont le rayon moyen des pores est compris entre 2 et 50 nanomètres.

On connaît d'autre part des méthodes indirectes fondées sur la détection des phénomènes capil laires se produisant dans les corps poreux. Ces méthodes déduisent les caractéristiques du corps poreux, soit de l'équilibre mécanique des surfaces - cas de la porosimétrie au mercure -, soit des conditions d'équilibre thermodynamique liquide-vapeur d'un condensat retenu à l'intérieur du corps poreux - cas de la méthode Barrett, Joyner et Halenda, dite méthode B.J.H. -.

La méthode de porosimétrie au mercure décrite notamment dans "Powder Technologie", vol. 29-1, mai-juin 1981, édité par Elsevier-Sequoia SA, Lausanne permet de déterminer la répartition poreuse et de déduire la surface spécifique. Elle consiste à injecter, sous forte pression, du mercure à l'intérieur du corps poreux.

Cette méthode consiste à mesurer les variations de volume apparent du système mercure-solide poreux soumis à des pressions croissantes. On déduit ensuite la répartition des rayons de pore de la courbe donnant la pression appliquée en fonction du volume de mercure injecté. Les rayons obtenus sont en fait les rayons des accès aux cavités poreuses et non pas les rayons des cavités poreuses elles-mêmes.

Cette méthode permet théoriquement d'atteindre des pores de 3 nanomètres de rayon, si on utilise des pressions voisines de 2,5 kbars. Toutefois, à ces pressions, la texture du corps poreux peut être perturbée par écrasement avant l'intrusion.

La méthode B.J.H. est une méthode de calcul de la répartition poreuse fondée sur l'analyse pas à pas de la branche de désorption de l'isotherme d'adsorption-désorption d'une vapeur condensable (azote, argon, etc...). Cette méthode est exposée en détail dans "The determination of pore volume and area distributions in porous substances. Computations from nitrogen isotherms" paru dans Journal of the American Chemical Society, vol 73, 1951 pages 373-380.

Comme pour la porosimétrie au mercure, l'inconvénient de cette méthode est qu'elle ne permet de connaître que la taille des orifices d'accès aux pores et non pas la taille des pores.

On connaît également une méthode indirecte, dite de thermoporométrie, décrite notamment dans la revue Thermochimica acta, n°21, 1977, pages 59 à 88. Cette méthode consiste en une étude thermodynamique de l'équilibre des phases liquide-solide et vapeur d'un fluide saturant totalement un corps poreux. Cette étude fournit une première relation permettant de calculer la taille des pores dans lesquels a lieu le changement d'état à partir de l'écart entre la température du point triple normal du condensat libre et la température à laquelle se produit ce changement d'état dans les pores. Une seconde relation entre cette température et l'énergie apparente de solidification mesurée dans les pores permet de calculer le volume poreux correspondant.

A l'aide de ces relations et du thermogramme de solidification, qui est l'enregistrement de la puissance dégagée par la solidification du condensat capillaire lors d'une décroissance linéaire de température, on procède à la détermination de la courbe de distribution des rayons des pores et des volumes poreux correspondants.

Cette méthode repose sur le fait que les conditions d'équilibre des phases solide, liquide et gazeuse d'une substance pure à l'état très divisé sont fonction de la courbure des interfaces. Dans le cas d'un fluide contenu dans un corps poreux, la courbure de l'interface solide-liquide est imposée par la taille du pore. La température de congélation, ou de solidification, est donc différente dans chaque pore du matériau.

Le thermogramme de solidification d'un condensat connu dans un corps poreux inconnu permet ainsi la détermination de la taille des pores par la mesure de la température de solidification, et du volume de ces pores par la mesure de l'énergie de changement d'état. Cette méthode donne ainsi la taille réelle des pores et non pas celle de leurs orifices d'accès comme dans le cas des méthodes B.J.H et de porosimétrie au mercure.

Plus précisément, dans la méthode de thermoporométrie, à chaque température la congélation s'effectue dans des pores de taille déterminée. Connaissant l'énergie apparente de solidification, le volume de ces pores est déterminé par une mesure calorimétrique de l'énergie libérée à cette température.

La courbe de répartition des rayons de pores se déduit ainsi directement du thermogramme de solidification.

Les appareils de mesure thermique connus mettant en oeuvre cette méthode sont en général des calorimètres conçus pour faire des mesures précises de quantité de chaleur. Sur ces appareils, la mesure de température est secondaire et peu précise.

Cette mesure de température est pourtant primordiale en thermoporométrie puisqu'elle est à la base de la méthode de calcul du rayon des pores. Dans les appareils connus, les difficultés de contrôle de la température ont pour conséquence l'impossibilité d'éviter pendant la descente en température la surfusion du fluide dans lequel le corps poreux est immergé. Cette plage de surfusion est plus ou moins importante selon les fluides utilisés. Elle peut atteindre 10° et plus dans le cas de l'eau. Cette plage de surfusion limite d'autant l'exploitation du thermogramme de solidification.

Au contraire, l'objet de l'invention est un appareil de mesure thermique de la texture d'un corps poreux apte à mesurer et à contrôler de manière très précise la température. De cette façon, on peut réaliser un cycle thermique évitant la surfusion pendant la descente linéaire en température. Ceci permet de rendre exploitable le thermogramme de solidification même avec des échantillons de corps poreux à très gros rayons de pore, par exemple jusqu'à 150 nanomètres. Ceci représente une amélioration importante par rapport aux appareils classiques, de type calorimètre, dont le domaine d'analyse était limité aux corps poreux dont les pores ont une dimension inférieure à 10 nanomètres.

De manière précise, l'invention a pour objet un appareil de mesure thermique de la texture d'un corps poreux comprenant une tête de mesure, un ensemble de mesure et un moyen de traitement et de commande, ladite tête de mesure étant munie de deux cellules cylindriques identiques, une cellule de mesure et une cellule de référence, disposées dans un four, ledit appareil étant caractérisé en ce que l'ensemble de mesure comprend :

- un moyen de mesure de la température de la cellule de mesure,
- un moyen de mesure d'un effet calorifique dans la cellule de mesure, ledit moyen étant constitué d'un moyen de détection de l'effet calorifique et d'un moyen d'étalonnage,
- un moyen de régulation en température comprenant un moyen de chauffage du four.

De manière préférée, le signal délivré par le moyen de mesure de la température est étalonné au moyen de substances de référence.

Selon un mode de réalisation préféré, chaque cellule comprend un support de forme générale cylin drique, le support de la cellule de mesure recevant le corps poreux à étudier, et un premier enroulement thermorésistif, extérieur audit support et concentrique à celui-ci, chaque premier enroulement thermorésistif étant relié au moyen de mesure en température.

De manière préférée, le moyen de détection de l'effet calorifique dans la cellule de mesure comprend un moyen de détection de la température, pour chaque cellule, et un moyen de mesure du déséquilibre de température entre ces cellules.

Selon un mode de réalisation préféré, le moyen de détection de la température de chaque cellule est constitué d'un second enroulement thermorésistif, extérieur et concentrique au premier enroulement thermorésistif, lesdits seconds enroulements thermorésistifs étant reliés au moyen de mesure du déséquilibre de température.

Selon un autre mode de réalisation préféré, chaque cellule comporte un seul enroulement thermorésistif pour la mesure de la température et la détection de l'effet calorifique.

De manière préférée, le moyen d'étalonnage produit, par effet Joule, un effet calorifique de niveau réglable connu dans la cellule de mesure.

Selon un mode de réalisation préféré, chaque cellule comprend un troisième enroulement thermorésistif, extérieur et concentrique aux autres enroulements thermorésistifs, lesdits troisièmes enroulements thermorésistifs étant reliés au moyen d'étalonnage.

Selon un mode de réalisation préféré, le moyen de traitement et de commande assure une régulation thermique du four en commandant le moyen de chauffage pour maintenir la température mesurée par le moyen de mesure de la température du four, ou la température mesurée par le moyen de mesure de la température de la cellule de mesure, à une température de consigne $T_c$.

De manière préférée, le moyen de traitement et de commande est apte à exécuter les étapes successives suivantes :

- décroissance, linéaire ou non, de la température du four jusqu'à solidification du fluide contenu dans les pores du corps poreux,
- inversion de la variation de température jusqu'à fusion partielle du fluide en excès,
- décroissance, linéaire ou non, en température jusqu'à solidification complète du fluide, ces étapes étant éventuellement séparées par des paliers en température pour éviter la propagation des chocs thermiques.

Ces étapes permettent d'éviter la surfusion et donc de construire un thermogramme de solidification exploitable pour les pores de grande taille aussi bien que pour ceux de petite taille.

Les caractéristiques et avantages de l'invention ressortiront mieux de la description qui va suivre, donnée à titre illustratif mais non limitatif, en référence aux dessins annexés, sur lesquels :

- la figure 1 est une représentation schématique de l'appareil de mesure thermique de l'invention,
- la figure 2 représente schématiquement la structure d'une cellule de la tête de mesure de l'appareil de l'invention,
- la figure 3 illustre un mode de réalisation du moyen de mesure de la température associé aux premiers enroulements thermorésistifs,
- la figure 4 illustre un mode de réalisation du moyen de détection de l'effet calorifique,
- la figure 5 illustre un autre mode de réalisation du moyen de mesure de la température et du moyen de détection de l'effet calorifique,
- la figure 6 illustre un mode de réalisation de la régulation thermique.

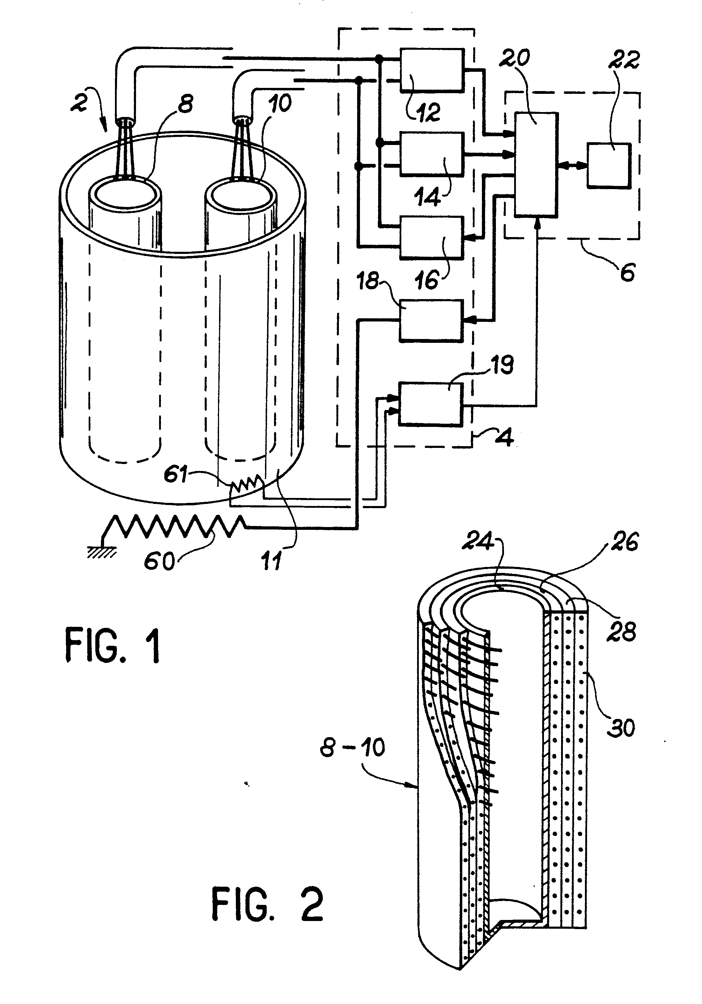

On a représenté sur la figure 1 un dessin schématique de l'appareil de mesure thermique de l'invention. Cet appareil est constitué de trois parties : une tête de mesure 2, un ensemble de mesure 4 et un moyen de traitement et de commande 6. La tête de mesure 2 est un capteur thermique différentiel comprenant deux cellules cylindriques 8 et 10 identiques disposées dans un four 11. L'une des cellules est une cellule de mesure contenant le corps poreux saturé et immergé dans un fluide, et l'autre une cellule de référence. Le four comprend une résistance de chauffage 60. Il peut comprendre également un capteur tel qu'une thermorésistance 61.

La tête de mesure est généralement disposée dans un cryostat de manière à atteindre la température requise (au moins -40°C si le fluide est de l'eau et -60°C si le fluide est du benzène). Différents cryostats classiques peuvent être utilisés : cryostat à immersion de type azote ou oxygène liquide, cryostat à évaporation de type compresseur à fréon, cryostat à liquide réfrigéré, cryostat à effet PELTIER, chacun de ces moyens pouvant être pris isolément ou en association.

Les cellules 8, 10 sont reliées électriquement à l'ensemble de mesure 4. Cet ensemble comprend un moyen 12 de mesure de la température, un moyen 14 de mesure du déséquilibre de température entre les deux cellules, ce moyen étant un élément d'un moyen de détection d'un effet calorifique dans la cellule de mesure, un moyen d'étalonnage 16, et un moyen 18 de chauffage du four. L'ensemble de mesure peut également comprendre un moyen 19 de mesure de la température du four. Chaque moyen de l'ensemble de mesure 4 est relié au moyen de traitement et de commande 6. Ce dernier comprend un moyen de calcul 20, par exemple un système à microprocesseur et des moyens périphériques 22 d'affichage et d'impression.

Le moyen 12 de mesure de la température délivre au moyen de calcul 20 la température de la cellule contenant le corps poreux de la tête de mesure 2. Ce signal peut être utilisé, en retour, par le moyen de calcul 20 pour commander le moyen de chauffage 18 afin de maintenir la température des cellules 8, 10 à une valeur de consigne. La régulation en température peut également être réalisée, pour le four, en fonction du signal délivré par le moyen 19.

Le moyen 14 délivre au moyen de calcul 20 un signal représentatif du dégagement, ou de l'absorption, de chaleur produite par le changement d'état du fluide lors d'une variation de température. Le moyen d'étalonnage 16 peut émettre une quantité de chaleur connue dans la cellule de mesure, par exemple par effet Joule. Ceci permet d'étalonner le signal délivré par le moyen 14. Ce moyen d'étalonnage est intéressant en ce qu'il autorise un étalonnage à toute température, c'est-à-dire un étalonnage continu. Toutefois, l'appareil peut également fonctionner avec un étalonnage discontinu, par exemple du type de ceux dans lesquels on introduit un échantillon d'une substance connue dans la cellule de mesure qui dégage par fusion une quantité de chaleur connue. L'appareil est alors étalonné pour la température de fusion de cette substance connue.

Le fonctionnement de l'appareil de l'invention nécessite une connaissance précise de la température du corps poreux. En effet, sans un étalonnage, il est impossible de déterminer de manière précise le rayon des pores en fonction de la température de chan gement d'état du fluide condensé. La nécessité de connaître de manière précise la température apparaît clairement sur l'exemple suivant. Dans le cas où le fluide est de l'eau, le rayon des pores $R_p$ est lié à une variation de température $\Delta\theta$ par la relation suivante :

$$R_p = -\frac{64,67}{\Delta\theta} + 0,57 \text{ avec } 0°C \gt \Delta\theta \gt -40°C.$$

La présence de pores de rayon 50 nanomètres conduit donc à une variation de température $\Delta\theta$ de 1,3°C. Une incertitude de 0,026°C sur cette variation de température conduit à une incertitude de 1 nanomètre sur la taille des pores.

Pour étalonner l'appareil, on utilise donc une méthode qui consiste en l'étude de l'effet calorifique résultant de la fusion de différents corps de référence à des vitesses de balayage en température variable. Plusieurs cycles différents de balayage en température peuvent être élaborés par le moyen de traitement et de commande.

L'étude de l'effet calorifique engendré pendant chaque cycle de balayage en température permet, de manière connue, de déterminer les coefficients permettant de calculer le rayon des pores et le volume poreux du corps poreux analysé.

Lorsque l'appareil est étalonné, on élabore le thermogramme de solidification reliant la quantité de chaleur dégagée en fonction d'une variation linéaire de température. On détermine ensuite de manière connue la courbe de répartition

$$\frac{dV}{dR}$$

où V est le volume des pores et R le rayon des pores. L'élaboration du thermogramme de solidification est délicate avec les appareils de type connu car un phénomène de surfusion apparaît généralement lors de la descente en tempéra ture. Ceci limite la méthode avec les appareils connus, aux pores dont la dimension est inférieure 30 nanomètres.

Pour pallier cet inconvénient, on procède conformément à l'invention de la manière suivante ;

1. On refroidit rapidement le four jusqu'à solidification du condensat. La vitesse de refroidissement peut atteindre 100°C/heure ou plus.

2. On réchauffe le corps poreux de manière contrôlée jusqu'au début de la fusion du fluide en excès. La vitesse de réchauffement est de l'ordre de 0,5°C/h à 30°C/h. Elle dépend de la précision requise pour la mesure des pores les plus gros. En effet, plus les pores sont de taille élevée, plus il est important de ralentir la vitesse de variation de la température de façon à ce que, d'une part, l'équilibre thermodynamique soit réalisé à chaque instant et, d'autre part, que le temps de réponse du calorimètre ne perturbe pas le thermogramme.

3. On refroidit de manière contrôlée jusqu'à solidification complète du fluide. Ce refroidissement se fait avec les mêmes précautions que le réchauffement de l'étape précédente.

La difficulté du procédé réside en ce qu'il est nécessaire de conserver un peu du condensat solidifié en excès au début de la solidification qui fait l'objet du point 3, ce condensat solidifié servant de germe pour la solidification finale. Cette difficulté est vaincue dans l'appareil de l'invention grâce à la possibilité de contrôler précisément la température de l'échantillon du corps poreux.

On va maintenant décrire un mode de réalisation de chacun des moyens de l'appareil de l'invention.

La figure 2 illustre un mode de réalisation des cellules de la tête de mesure. Chaque cellule com prend une douille métallique 24 formant support. La cellule de mesure reçoit dans ce support une nacelle contenant le corps poreux à étudier saturé et immergé dans le condensat. De préférence, cette douille a une forme cylindrique allongée, ce qui permet une meilleure homogénéité thermique.

Autour de la douille 24, sont disposés de manière concentrique plusieurs enroulements thermorésistifs. L'enroulement le plus interne est le premier enroulement thermorésistif 26 qui est relié au moyen 12 de mesure de la température. Autour de ce premier enroulement est disposé un deuxième enroulement 28 qui est relié au moyen 14 de mesure du déséquilibre thermique entre les cellules. Enfin, un troisième enroulement 30 est relié au moyen d'étalonnage 16.

Selon un autre mode de réalisation (non représenté), la cellule peut n'être dotée que de deux enroulements thermorésistifs, le premier étant utilisé pour la mesure de température et la mesure du déséquilibre de température et le second pour l'étalonnage de l'effet calorifique.

Les différents éléments constituant la cellule sont calculés ou choisis par l'homme de l'art en fonction de nombreux critères parmi lesquels :

- une gamme de température de -80°C à +100°C,
- des matériaux de construction neutres thermiquement,
- une compatibilité des caractéristiques thermiques et mécaniques des différents éléments;
- une haute sensibilité des éléments détecteurs,
- et une très bonne symétrie de construction (thermique, massique et électrique),
- une faible inertie thermique.

De préférence, les deux cellules sont absolument identiques (matériau, nombre d'enroulements thermorésistifs, ...) afin d'être moins sensibles aux effets parasites.

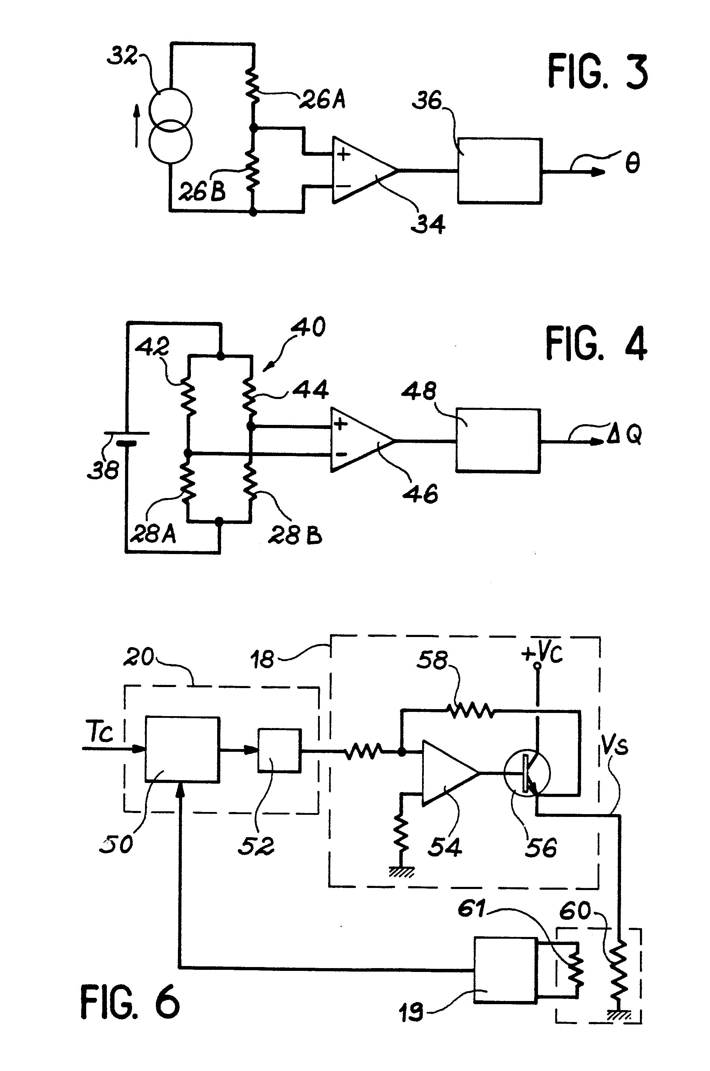

Pour mesurer la température du corps poreux avec la précision requise, le moyen de mesure de température 12 réalise une mesure absolue de température de la cellule de mesure contenant le corps poreux et le condensat. La figure 3 illustre un mode de réalisation de ce moyen de mesure en température associé au premier enroulement thermorésistif de chaque cellule.

Ce moyen comprend un générateur de courant 32 qui alimente les premiers enroulements thermorésistifs $26_A$, $26_B$ de la cellule de référence et de la cellule de mesure. Ces deux enroulements sont mis en série et sont traversés par le même courant. Ainsi, les deux cellules sont-elles placées dans des conditions identiques. De plus, ceci permet d'utiliser indifféremment l'une ou l'autre des cellules pour la mesure. La tension aux bornes de l'enroulement thermorésistif $26_B$ de la cellule de mesure est détectée par un amplificateur différentiel 34. Cet amplificateur est suivi d'un intégrateur 36 qui délivre un signal représentatif de la température de la cellule.

On a représenté sur la figure 4 un mode de réalisation du moyen 14 de mesure du déséquilibre de température entre les deux cellules. Ce moyen permet de mesurer le dégagement ou l'absorption de chaleur produite par le changement d'état du condensat.

Ce moyen de mesure comprend un générateur de tension continue 38 alimentant un pont de résistances 40, un amplificateur différentiel 46 et un intégrateur 48 qui délivre un signal représentatif de l'effet calorifique $\Delta Q$. Le pont de résistance comprend deux séries de résistances en parallèle alimentées par le gé nérateur 38. La première série comprend une résistance 42 en série avec la thermorésistance $28_A$ du second enroulement thermorésistif de la cellule de référence. La deuxième série de résistances comprend une résistance 44 en série avec le second enroulement thermorésistif $28_B$ de la cellule de mesure. Le point commun des résistances 42 et $28_A$ d'une part et le point commun des résistances 44 et $28_B$ d'autre part sont connectées aux deux entrées de l'amplificateur 46.

Ce montage différentiel permet d'atteindre un seuil de détection meilleur que 10 µW.

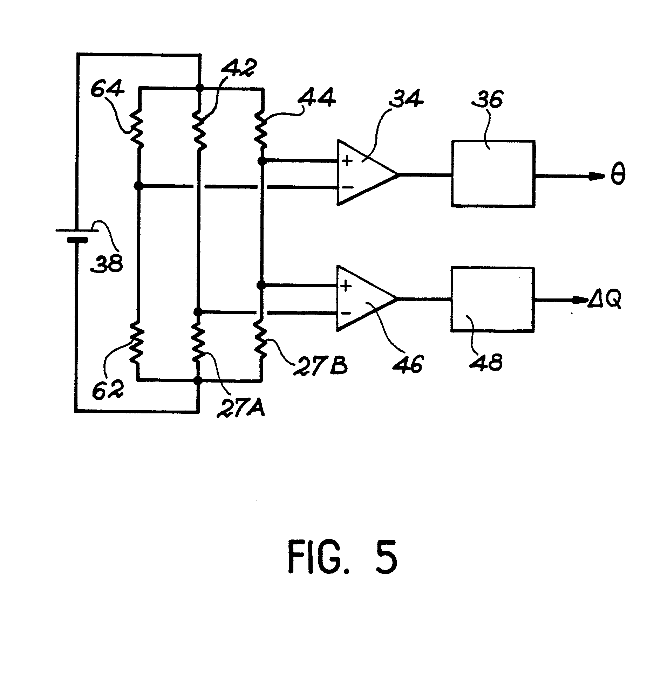

On a représenté sur la figure 5 une variante de réalisation dans le cas où chaque cellule ne comporte que deux enroulements thermorésistifs, l'un étant utilisé simultanément pour la mesure de la température dans la cellule de mesure et pour la mesure du déséquilibre de température entre les deux cellules. Sur la figure 5 cet enroulement thermorésistif porte la référence 27A pour la cellule de référence et la référence 27B pour la cellule de mesure.

Sur la figure 5, les éléments identiques à ceux de la figure 4 portent les mêmes références. La mesure de l'effet calorifique s'obtient par un dispositif identique à celui de la figure 4. En revanche, la mesure de la température est obtenue de manière différente de celle de la figure 3. Une résistance 62 de valeur fixe connue est mise en série avec une résistance 64 identique aux résistances 42, 44. L'ensemble des résistances 62, 64 est mis en parallèle avec les ensembles de résistance 44, 27B et 42, 27A. L'amplificateur différentiel 34 reçoit, sur son entrée non inverseuse, le signal délivré par le point commun des résistances 27B, 44 et sur son entrée inverseuse, le signal délivré par le point commun des résistances 62, 64. La résistance 62 permet de compenser la dérive de l'appareil dans la mesure de température.

Le moyen 14 de mesure du déséquilibre de température entre les cellules et les enroulements thermorésistifs associés représentés sur les figures 4 et 5 peut être remplacé par un moyen de mesure de flux de chaleur classique de type fluxmètre à thermopiles. Ce montage différentiel à thermocouple présente toutefois l'inconvénient d'une liaison physique entre les deux cellules. On utilise donc, de préférence, un moyen de mesure conforme aux figures 4 et 5 qui est peu coûteux, sensible, sans couplage, sans vieillissement et qui possède une bonne symétrie.

On a représenté sur la figure 6 la chaîne de régulation thermique du four de l'appareil de l'invention. Cette chaîne est constituée d'un calculateur 50 recevant d'une part une température de consigne et d'autre part la température relevée par le moyen 19 de mesure de la température du four. Ce calculateur délivre un signal numérique qui est converti en un signal analogique par un convertisseur numérique analogique 52. Le calculateur et le convertisseur numérique-analogique sont deux éléments du moyen de calcul 20.

Le signal délivré par le convertisseur analogique-numérique 52 est reçu par le moyen de chauffage 18 qui comprend essentiellement un amplificateur différentiel 54, un transistor de puissance 56 et une résistance 58 de contre-réaction. L'entrée inverseuse de l'amplificateur 54 est reliée à la sortie du convertisseur numérique-analogique 52, sa sortie est connectée à la base du transistor 56. Ce dernier reçoit sur son collecteur une tension continue d'alimentation $V_C$ et délivre sur son émetteur une tension $V_S$. La résistance de contre-réaction 58 est disposée entre l'entrée inverseuse de l'amplificateur 54 et l'émetteur du transistor 56. L'émetteur du transistor 56 est relié à la résistance chauffante 60 du four.

Cette température est détectée par un capteur 61, par exemple une thermorésistance, puis est traduite en un niveau de température par le moyen 19. Cette température peut également être détectée par le premier enroulement thermorésistif 26B de la cellule de mesure et traduite par le moyen 12, au lieu du capteur 61 et du moyen 19.

La valeur de consigne $T_C$ qui est comparée par le calculateur 50 à la valeur délivrée par le moyen 12 ou 19 dépend de nombreux paramètres parmi lesquels la vitesse de balayage en température, le poids de l'échantillon de corps poreux introduit dans la cellule de mesure, la nature du fluide de condensation utilisé, les différentes constantes calorimétriques des éléments de la tête de mesure.

La régulation par l'enroulement thermorésistif 26B assure une meilleure régulation thermique des cellules. Cependant, elle est délicate à mettre en oeuvre à cause du temps de réponse des cellules. Au contraire, la régulation par le capteur 61 est plus simple.

## Revendications

1. Appareil de mesure thermique de la texture d'un corps poreux comprenant une tête de mesure (2), un ensemble de mesures (4) et un moyen de traitement et de commande (6), ladite tête de mesure étant munie de deux cellules cylindriques identiques à faible inertie (8,10), une cellule de mesure et une cellule de référence, disposés dans un four (11), ledit appareil étant caractérisé en ce que l'ensemble de mesure (4) comprend :

(a) un moyen de mesure de la température moyenne (12) pour mesurer la température moyenne de la cellule de mesure, ledit moyen de mesure de la température moyenne délivrant un signal au moyen de traitement et de commande afin de calculer le rayon et la taille du pore examiné ;

(b) un moyen de mesure de l'effet calorifique pour mesurer un effet calorifique dans la cellule de mesure, ledit moyen de mesure d'un effet calorifique délivrant un signal au moyen de traitement et de commande pour calculer le volume du pore, ledit moyen de mesure d'un effet calorifique comprenant un moyen de détection d'un effet calorifique et un moyen électrique d'étalonnage (16) ;

(c) un moyen de régulation en température comprenant un four (11) comme moyen de chauffage de la tête de mesure et un cryostat comme moyen de refroidissement de la tête de mesure.

2. Appareil selon la revendication 1, caractérisé en ce que chaque cellule (8,10) comprend un support (24) de forme généralement cylindrique, et un premier enroulement thermorésistif (26), extérieur audit support et concentrique à celui-ci, chaque premier enroulement thermorésistif étant connecté au moyen de mesure de la température moyenne (12).

3. Appareil selon la revendication 2, caractérisé en ce que le moyen de détection d'un effet calorifique pour détecter un effet calorifique dans la cellule de mesure comprend, pour chaque cellule, un moyen de mesure de déséquilibre thermique (14) et un second enroulement thermorésistif (28), extérieur et concentrique au premier enroulement thermorésistif, ledit second enroulement thermorésistif étant relié audit moyen de mesure de déséquilibre thermique.

4. Appareil selon la revendication 3, caractérisé en ce que chaque cellule comprend un troisième enroulement thermorésistif (30), extérieur et concentrique aux deux autres enroulements thermorésistifs,ledit troisième enroulement thermorésistif étant relié au moyen électrique d'échantillonnage (16).

5. Appareil selon la revendication 1, caractérisé en ce que chaque cellule comprend un support fin (24) généralement cylindrique et un unique enroulement thermorésistif (27A, 27B) extérieur audit support et concentrique à celui-ci, ledit enroulement thermorésistif étant relié au moyen de mesure de la température moyenne (12) et au moyen de détection de l'effet calorifique.

6. Appareil selon la revendication 5, caractérisé en ce que chaque cellule comprend un autre enroulement thermorésistif, extérieur et concentrique au premier enroulement thermorésistif, ledit autre enroulement thermorésistif étant relié au moyen électrique d'étalonnage (16).

7. Appareil selon la revendication 1, caractérisé en ce que le cryostat est un dispositif à effet PELTIER.

8. Appareil selon la revendication 1, caractérisé en ce que le moyen de traitement et de commande réalise une régulation en température du four en commandant le moyen de chauffage afin de maintenir la température moyenne de la cellule de référence à une valeur de référence programmée.

9. Appareil selon la revendication 8, caractérisé en ce que la cellule de référence comprend un support fin de forme généralement cylindrique, et un enroulement thermorésistif extérieur audit support et concentrique à celui-ci, ledit enroulement thermorésistif détectant la température moyenne de la cellule de référence et délivrant ladite température moyenne au moyen de traitement et de commande.

10. Appareil selon la revendication 9, caractérisé en ce que la valeur de référence programmée prend en compte la vitesse de balayage en température et le poids de l'échantillon de matériel poreux étudié.

11. Appareil selon la revendication 1, caractérisé en ce que le moyen de traitement et de commande est apte à réaliser les étapes successives suivantes :

- décroissance linéaire ou non de la température du four jusqu'à solidification du fluide contenu dans les pores du corps poreux,

- inversion de la variation de température jusqu'à fusion partielle du fluide en excès,

- inversion automatique du sens de variation de la température avant la fin de la fusion du fluide en excès et décroissance linéaire ou non en température jusqu'à la solidification complète du fluide, ces étapes permettant d'éviter la surfusion du condensat.

12. Appareil selon la revendication 11, caractérisé en ce que le moyen de traitement et de commande est apte à commander des paliers de température entre chaque étape pour éviter la propagation de chocs thermiques.

FIG. 1

FIG. 2

FIG. 3

FIG. 4

FIG. 6

FIG. 5